Europäisches Patentamt

European Patent Office

Office européen des brevets

(19)

(11) Veröffentlichungsnummer: **0 222 692**
**B1**

(12) **EUROPÄISCHE PATENTSCHRIFT**

(45) Veröffentlichungstag der Patentschrift:
**17.01.90**

(51) Int. Cl.⁴: **F16C 19/34**, F16C 29/04

(21) Anmeldenummer: **86730178.0**

(22) Anmeldetag: **29.10.86**

(54) **Wälzlager.**

(30) Priorität: **11.11.85 DE 8532126 U**

(43) Veröffentlichungstag der Anmeldung:
**20.05.87 Patentblatt 87/21**

(45) Bekanntmachung des Hinweises auf die Patenterteilung:
**17.01.90 Patentblatt 90/3**

(84) Benannte Vertragsstaaten:
**AT BE CH DE ES FR GB GR IT LI LU NL SE**

(56) Entgegenhaltungen:
**DE-A- 2 911 614**
**DE-A- 3 120 265**
**FR-A- 1 223 826**
**FR-A- 2 032 171**
**GB-A- 706 893**

(73) Patentinhaber: **Gugel, Georg, Bechhofener Weg 42,
D-8552 Höchstadt(DE)**

(72) Erfinder: **Gugel, Georg, Bechhofener Weg 42,
D-8552 Höchstadt(DE)**

(74) Vertreter: **Voigt, Günter, Dipl.-Ing., Patentanwälte Dr.
Schulze & Voigt Postfach 21 01 04 Nordring 152,
D-8500 Nürnberg 21(DE)**

**Beschreibung**

Die Erfindung bezieht sich auf ein Wälzlager gemäß Oberbegriff des Anspruchs 1.

Ein solches Wälzlager ist grundsätzlich bereits aus der GB-A 706 893 bekannt. Dort sind Wälzkörper vorgesehen, die auch zylindrisch sein können. Geführt werden die Wälzkörper durch in den V-förmigen Einschnitten vorgesehene Rippen, die in entsprechende Nuten der Wälzkörper eingreifen. Dies macht jedoch fertigungstechnisch einen relativ großen Arbeitsaufwand erforderlich.

Aus dem DE-U 1 930 615 ist es ferner bekannt, die Laufflächen der Wälzkörper auf bei Bedarf auswechselbaren Stahleinlagen, sogenannten Stahlbandagen, laufen zu lassen.

Falls keine besonderen Genauigkeitsforderungen gestellt werden, bietet sich die Verwendung eines Vier-Punkt-Lagers an. Diese Lagerbauform stellt nut geringe Anforderung an die Planheit und Steifigkeit der Anschlußkonstruktionen. Die Axial- und Radialspiele werden dem Verwendungszweck angepaßt und sind meistens verhältnismäßig groß. Vier-Punkt-Lager sind für die Aufnahme von mittleren Axial-, Radial, und Momentbelastungen geeignet. Die zulässige Umfangsgeschwindigkeit bei maximaler Belastung beträgt 4 m/s, kann aber auch kurzzeitig darüber liegen.

Bei mittleren Axial- und Momentbelastungen und hohen Radialkräften findet das Kreuzrollenlager Anwendung, insbesondere aber dann, wenn ein gegen Null gehendes Betriebsspiel bzw. eine Vorspannung oder besonders gleichmäßiger Drehwiderstand und Laufgenauigkeit verlangt werden. Die Anforderungen an die Anschlußkonstruktionen hinsichtlich Planheit und Steifigkeit sind höher als bei Vier-Punkt-Lagern. Die zulässige Umfangsgeschwindigkeit beträgt bei maximaler Belastung lediglich 2 m/s, kann jedoch auch bei diesem Lager kurzzeitig darüber liegen.

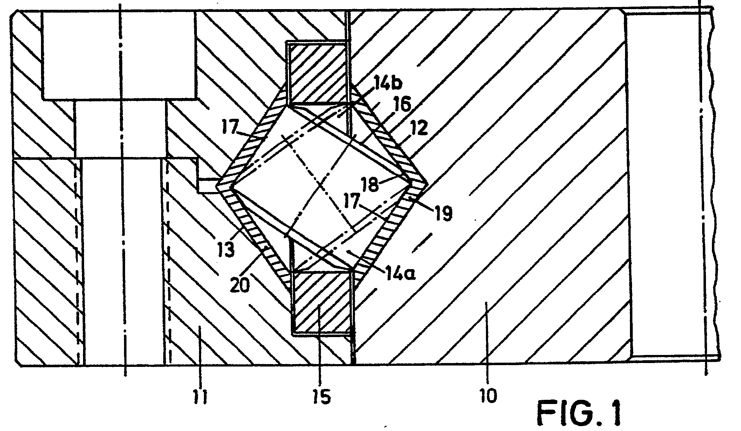

Aus der DE-OS 31 20 265 ist ein Kreuzrollenlager bekannt, bei dem aufeinanderfolgende Wälzkörper einen Winkel von 90 Grad bilden. Die Tragringe weisen V-förmige Nuten auf, in denen die Wälzkörper durch ihre Mantelflächen und auch durch ihre Stirnflächen bzw. Übergangsradien geführt werden. Um eine sichere Distanzierung der einzelnen Wälzkörper untereinander zu gewährleisten, ist ein Segment-Käfig vorgesehen. Wie insbesondere aus der dortigen Fig. 1 erkennbar ist, liegen die Übergangsradien bzw. die Stirnflächen am Innenring der Wälzkörper an den Oberflächen der V-förmigen Nuten an. Während des Abrollvorgangs der Wälzkörper entstehen daher an den Übergangsradien bzw. Stirnflächen der Wälzkörper Reibmomente, die die Leichtgängigkeit des Lagers mindern, den Verschleiß erhöhen und die Laufruhe des Lagers nachteilig beeinflussen.

Aus der DE-OS 30 06 643 ist ein sogenanntes Drahtwälzlager bekannt, das ebenfalls aus zwei konzentrischen Tragringen besteht, die an ihren einander zugekehrten zylindrischen Flächen mit annähernd V-förmigen Nuten versehen sind, in deren Begrenzungsflächen aber Vertiefungen mit eingesetzten Laufdrähten von auf denen zylindrische Wälzkörper abrollen. Auch hier sind die Achsen der aufeinanderfolgenden Wälzkörper unter einem Winkel von 90 Grad zueinander angeordnet.

Aus der DE-A 2 911 614 ist ein Kreuzrollenlager für Linearbewegungen bekannt, bei dem die V-förmigen Nuten einen rechten Winkel bilden und die Abstützung der Wälzkörper über die Umfangs- und Stirnflächen erfolgt.

Der Erfindung liegt die Aufgabe zugrunde, ein Wälzlager zu schaffen, das leichtgängig ist und darüber hinaus in der Herstellung einen verminderten Aufwand erfordert.

Die Lösung dieser Aufgabe erfolgt erfindungsgemäß durch die kennzeichnenden Merkmale des Anspruchs 1.

Vorteilhafte Weiterbildungen ergeben sich aus den Unteransprüchen.

Die Erfindung wird nachfolgend anhand der Zeichnungsfiguren beispielsweise erläutert. Es zeigen:

Fig. 1 ein aus einem inneren und einem äußeren Tragring bestehendes Kreuzrollenlager, bei dem die aufeinanderfolgenden Wälzkörper einen Kreuzungswinkel von etwa 110 Grad bilden, bei dem die V-förmigen Nuten mit Einlagen, vorzugsweise aus gehärtetem Stahl, versehen sind,

Fig. 2 ein Lager gem. Fig. 1, wobei jedoch die Tragringe ausgeprägte Schultern zur Halterung der Einlagen aufweisen,

Fig. 3 ein Lager gem. Fig. 2, bei welchem der Öffnungswinkel im Tragring geringfügig kleiner ist als der der Einlage.

In Fig. 1 ist ein Kreuzrollenlager dargestellt, das aus einem inneren Tragring 10 und einem äußeren Tragring 11 besteht, wobei die einander zugekehrten Mantelflächen der Tragringe 10 und 11 im wesentlichen V-förmige Nuten 12 bzw. 13 aufweisen. In diesen Nuten sind Wälzkörper 14a bzw. 14b angeordnet, wobei aufeinanderfolgende Wälzkörper 14a bzw. 14b um einen Winkel (Kreuzungswinkel) von etwa 100 bis 130 Grad, vorzugsweise um einen Winkel von 110 Grad, gegeneinander versetzt sind. Aufeinanderfolgende Wälzkörper 14a bzw. 14b werden durch einen Kä fig 15 im jeweils gewünschten gegenseitigen Abstand gehalten und darüber hinaus gegen ein Verdrehen gesichert. Am Übergang von einer Stirnfläche 16 eines Wälzkörpers 14 zu seiner Mantelfläche 17 kann eine schmale Fase 18 vorgesehen werden, deren, Winkel gegenüber der Mantelfläche 17 dem Winkel der V-förmigen Nut 12 bzw. 13 entspricht. Anstelle der Fase 18 kann auch ein umlaufender Rundungsradius als Übergang von der Mantelfläche 17 zur Stirnfläche 16 vorgesehen werden.

Bei der ober beschriebenen Ausbildung der V-förmigen Nuten 12 und 13 sowie der Wälzkörper 14 ergeben sich anders als bei den bisher bekannten Kreuzrollenlagern mit 90 Grad Nuten nicht mehr über praktisch die gesamte Stirnfläche 16·verteilte Reibungskräfte, sondern die Reibungskräfte treten nur noch zwischen der V-förmigen Nut und der relativ schmalen Fase 18 bzw. dem Rundungsradius auf.

Wegen des geringen Hebelarms in Bezug auf den jeweiligen Abrollpunkt sind die so entstehenden Reibungsmomente sehr gering und gegenüber den Momenten zu vernachlässigen, die bei den bisher bekannten Kreuzrollenlagern an deren Wälzkörper-Stirnflächen auftraten.

Das oben beschriebene Lager weist einen erheblich verringerten Verschleiß und eine erheblich verringerte Lagerreibung auf. Auch das bei den bekannten Lagern häufig auftretende Hängen, insbesondere beim Anlauf und bei horizontaler Drehachse, das auf ein Verkanten der Rollen zurückzuführen ist, werden bei dem oben beschriebenen Lager vermieden. Als besondere Vorteile des Lagers sind insbesondere zu erwähnen: hohe zulässige Drehzahlen (Umfangsgeschwindigkeiten bis etwa 15 m/s), geräuscharmer Lauf, niedriger und gleichmäßiger Drehwiderstand, gleichmäßiger Lauf (kein Hängen), gute dynamische Tragfähigkeit und problemloser Einsatz auch bei Lagern mit Vorspannung.

Um das Einfüllen der Wälzkörper zu erleichtern, kann – wie grundsätzlich bereits bekannt – zumindest ein Tragring 10, 11 geteilt ausgebildet sein oder aber mit einer – ebenfalls bereits bekannten – Einfüllöffnung versehen sein.

Zur gegenseitigen Distanzierung und zur Sicherung gegen ein Verdrehen und Verkanten der Wälzkörper kann ein Käfig 15 vorgesehen sein, der einteilig, segmentförmig oder auch kammförmig ausgebildet sein kann.

Die V-förmigen Nuten 12 und 13 der Tragringe 10 und 11 können mit einer Einlage 19 bzw. 20 versehen sein, wie diese in Fig. 1 dargestellt ist und die am Umfang geteilt ist. Bei etwa auftretendem Verschleiß können die Einlagen 19 bzw. 20 ausgetauscht werden, das Lager an sich aber weiter verwendet werden. Auch können solche Einlagen 19, 20 aus einem besonders hochwertigen Werkstoff hergestellt werden, ohne daß sich dadurch das Lager insgesamt nennenswert verteuert.

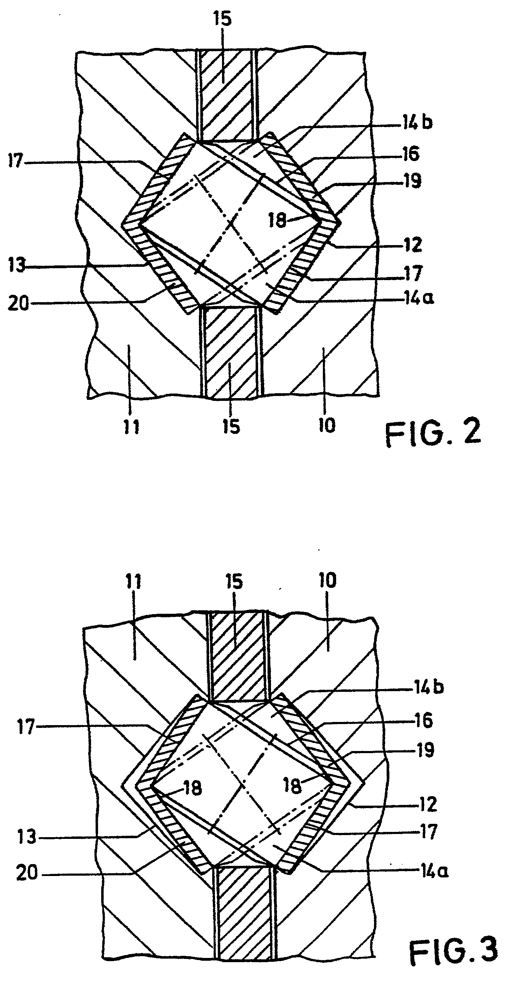

Darüber hinaus können die Einlagen 19 bzw. 20 und die Tragringe 10 bzw. 11 auch wie in Fig. 2 und Fig. 3 dargestellt ausgeführt werden. Die Einlagen 19 und 20 werden hierbei durch leichte elastische Verformung in die entsprechenden Sitze der Tragringe 10 und 11 gedrückt.

Wird nun der Öffnungswinkel der Tragringe 10 und 11 etwas kleiner als der der V-förmigen Einlage 19, 20 bemessen, so erhält man unter Berücksichtigung der entsprechenden Durchmesser ein federvorgespanntes Lager, wie es in Fig. 3 ersichtlich ist. Diese Lagerbauart ist besonders vorteilhaft für stoßartigen, erschütterungsreichen und schnellaufenden Betrieb.

Die verschiedenen, oben beschriebenen Lager können in erster Linie die Funktion eines Kreuzrollenlagers übernehmen. Bei Verwendung von Kugeln als Wälzkörper in Verbindung mit den V-förmigen Profilen 19 und 20 ergibt sich ein Einbauelement mit Vier-Punkt-Auflage, das ebenfalls besondere Vorteile bezüglich der Fertigung und der Spieleinstellung bei einem geteilten Tragring aufweist.

Da die Länge der Wälzkörper 14 geringer ist als deren Durchmesser, können die Wälzkörper 14 bei exzentrisch verschobenen Tragringen 10, 11 und radial zum Lager ausgerichteten Rotationsachsen der Wälzkörper 14 eingefüllt werden, sofern der konzentrische Ringspalt wenigstens geringfügig größer als die halbe Länge der Wälzkörper 14 ist.

## Patentansprüche

1. Wälzlager, insbesondere Kreuzrollenlager, im wesentlichen bestehend aus zwei konzentrischen Tragringen (10, 11) mit annähernd V-förmigen Nuten (12, 13) in den einanderzugekehrten Mantelflächen, wobei in den erwähnten Nuten (12, 13) zylindrische Wälzkörper (14) angeordnet sind und jeweils aufeinanderfolgende Wälzkörper (14a, 14b) um einen Winkel von etwa 100 bis 130 Grad gegeneinander versetzt sind, dadurch gekennzeichnet, daß die Wälzkörper (14) am Übergang von ihrer Stirnfläche (16) zu ihrer Mantelfläche (17) eine schmale Führungsfläche (18) aufweisen und in den Nuten (12, 13) der Tragringe (10, 11) ebenfalls im wesentlichen V-förmige Einlagen (19, 20) aus Stahl, insbesondere aus gehärtetem Stahl, vorhanden sind, welche ggfs. das Lager federnd vorspannen.

2. Wälzlager nach Anspruch 1, dadurch gekennzeichnet, daß die Wälzkörper (14) in einem diese gegen Verdrehen sichernden Käfig angeordnet sind.

3. Wälzkörper nach Anspruch 2, dadurch gekennzeichnet, daß der Käfig (15) einteilig ausgebildet ist.

4. Wälzlager nach Anspruch 2, dadurch gekennzeichnet, daß der Käfig (15) kammförmig ausgebildet ist.

5. Wälzlager nach Anspruch 2, dadurch gekennzeichnet, daß der Käfig (15) aus einer Vielzahl von Segmenten zusammengesetzt ist.

6. Wälzlager nach einem der Ansprüche 1 bis 5, dadurch gekennzeichnet, daß zumindest einer der beiden Tragringe (10, 11) zweiteilig ausgebildet ist.

7. Wälzlager nach einem der Ansprüche 1 bis 5, dadurch gekennzeichnet, daß ein Tragring (10, 11) mit einer Füllöffnung zum Einführen der Wälzkörper (14) versehen ist.

8. Wälzlager nach einem der Ansprüche 1 bis 5, dadurch gekennzeichnet, daß zwischen den ungeteilten Tragringen (10, 11) ein Ringspalt vorhanden ist, der geringfügig größer ist als die halbe Länge der Wälzkörper (14).

## Claims

1. Rolling bearing, in particular cross-roller bearing, essentially consisting of two concentric support rings (10, 11) with approximately V-shaped grooves (12, 13) in the lateral sufaces facing each other, cylindrical rolling elements (14) being arranged in the grooves (12, 13) mentioned and successive rolling elements (14a, 14b) each being offset to one another by an angle of about 100 to 130 degrees, characterized in that the rolling elements (14) have a narrow guide surface (18) at the transition form their end face (16) to the lateral surface (17), and in the grooves (12, 13) of the support rings (10, 11) there are likewise essentially V-shaped inserts (19, 20) made of steel, in particular of hardened steel, which, if appropriate, resiliently prestress the bearing.

2. Rolling bearing according to Claim 1, characterized in that the rolling elements (14) are arranged in a cage securing the latter against twisting.

3. Rolling element according to Claim 2, characterized in that the cage (15) is constructed in one piece.

4. Rolling bearing according to Claim 2, characterized in that the cage (15) is constructed in a comb shape.

5. Rolling bearing according to Claim 2, characterized in that the cage (15) is composed.of a plurality of segments.

6. Rolling bearing according to one of Claims 1 to 5, characterized in that at least one of the two support rings (10, 11) is constructed in two parts.

7. Rolling bearing according to one of Claims 1 to 5, characterized in that a support ring (10, 11) is provided with a charging aperture for introducing the rolling elements (14).

8. Rolling bearing according to one of Claims 1 to 5, characterized in that, between the undivided support rings (10, 11), there is an annular gap which is slightly larger than half the length of the rolling bodies (14).

**Revendications**

1. Roulement, en particulier roulement à rouleaux d'axes alternés, qui se compose pour l'essentiel de deux bagues concentriques (10), (11) dont les parois périphériques se faisant face comportent des rainures (12), (13) sensiblement en V, dans lesquelles sont disposés des éléments roulants cylindriques ou rouleaux (14), les éléments cylindriques (14a) et (14b) disposés à la suite étant décalés les uns par rapport aux autres d'un angle d'environ 100° à 130°, caractérisé en ce que les éléments roulants ou rouleaux (14) présentent une étroite surface de guidage (18) située entre leur surface cylindrique (17) et leurs surfaces frontales (16) et en ce que les rainures (12), (13) ménagées dans les bagues (10), (11) sont pourvues d'un revêtement (19), (20) en acier, en particulier en acier trempé, qui présente également une forme sensiblement en V et met en tant que de besoin le roulement en précontrainte élastique.

2. Roulement selon la revendication 1, caractérisé en ce que les rouleaux (14) sont disposés dans une cage prévenant tout risque de torsion desdits rouleaux.

3. Roulement selon la revendication 2 caractérisé en ce que la cage (15) est constituée d'une seule pièce.

4. Roulement selon la revendication 2 caractérisé en ce que la cage (15) est en forme de peigne.

5. Roulement selon la revendication 2 caractérisé en ce que la cage (15) se compose d'une multitude de segments.

6. Roulement selon l'une des revendications 1 à 5 caractérisé en ce que au moins l'une des bagues (10), (11) se compose de deux parties.

7. Roulement selon l'une des revendications 1 à 5 caractérisé en ce que l'une des bagues (10), (11) comporte une ouverture destinée à l'introduction des rouleaux.

8. Roulement selon l'une des revendications 1 à 5 caractérisé en ce que entre les bagues (10), (11) montées se trouve un jeu qui est légèrement supérieur à la moitié de la longueur des rouleaux (14).

FIG. 1

FIG. 2

FIG.3